# EUROPÄISCHE PATENTSCHRIFT

(11) **EP 1 587 028 B1**
(45) Veröffentlichungstag und Bekanntmachung des Hinweises auf die Patenterteilung: **02.06.2010**
(21) Anmeldenummer: 05005333.9
(22) Anmeldetag: 11.03.2005
(51) Int. Cl.: G06K 19/07

(54) **Schaltungsanordnung zur Lastregelung im Empfangspfad eines Transponders**
Circuit for load control in the reception path of a transponder
Circuit de contrôle d'une charge dans le trajet de réception d'un transpondeur

(30) Priorität: 17.03.2004 DE 102004013175
(43) Veröffentlichungstag der Anmeldung: 19.10.2005
(73) Patentinhaber: Atmel Automotive GmbH, 74072 Heilbronn (DE)
(72) Erfinder: Fischer, Martin, Dipl.-Ing., 74629 Pfedelbach (DE)
(74) Vertreter: Koch Müller Patentanwaltsgesellschaft mbH

(56) Entgegenhaltungen:
- US-A- 5 345 196
- US-A- 5 889 489
- MÖSCHWITZER, ALBRECHT: "Halbleiterelektronik" 1987, DR. ALFRED HÜTHIG VERLAG , HEIDELBERG , XP002505528 * Seite 385, Absatz 5.5.1.2. *

## Beschreibung

Die Erfindung betrifft eine Schaltungsanordnung zur Lastregelung von in einem Empfangspfad eines Transponders angeordneten Schaltungsteilen, eine Detektorschaltung zur Signaldetektion, insbesondere für passive und/oder semipassive Transponder, einen Transponder sowie ein Verfahren zum Betreiben des Transponders.

Die Erfindung liegt auf dem Gebiet der Transpondertechnologie und insbesondere im Bereich der kontaktlosen Kommunikation zum Zwecke der Identifikation. Zum allgemeinen Hintergrund dieser so genannten RFID-Technologie wird auf das "RFID-Handbuch" von Klaus Finkenzeller, dritte aktualisierte Auflage, 2002 verwiesen.

Bei passiven und semipassiven Transpondern wird ein von einer Basisstation ausgesendetes elektromagnetisches Signal von dem Transponder aufgenommen und demoduliert. Passive Transponder weisen über keine eigene Energieversorgung auf, so dass die im Transponder für die Demodulation und Dekodierung des empfangenen elektromagnetischen Signals benötigte Energie aus diesem elektromagnetischen Signal selbst entnommen werden muss. Die Entnahme von Energie aus einer elektromagnetischen Welle kann entweder induktiv über eine Antennenspule oder magnetisch unter Verwendung einer Dipolantenne erfolgen.

Bei derzeit verwendeten passiven 125 KHz Systemen wird die Aufnahme der Energie im elektromagnetischen Nahfeld durch induktive Kopplung realisiert. Die damit erzielte energetische Reichweite liegt im Bereich von wenigen Zentimetern bis etwa 0,5 m. Um eine höhere Reichweite sowie eine höhere Datenübertragungsrate für die Datenübertragung zu erzielen, werden im Bereich der RFID-Technologie zunehmend Trägerfrequenzen im UHF-Frequenzband oder Mikrowellen eingesetzt. Für solch hohe Frequenzen des Trägersignals werden zur Einkopplung der Energie und des Datensignals typischerweise Dipolantennen verwendet. Mit solchen Dipolantennen lassen sich bei passiven Transpondern Reichweiten im Bereich bis zu einigen Metern realisieren.

Ziel bei heutigen und zukünftigen RFID-Systemen ist es, mit passiven Transpondern möglichst hohe Reichweiten bei gleichzeitig möglichst hohen Datenübertragungsraten zu erzielen. Eine hohe Reichweite lässt sich insbesondere durch Erhöhung der Sendeleistung der Basisstation realisieren. Da RFID-Systeme elektromagnetische Wellen erzeugen und abstrahlen und somit als Funkanlagen interpretiert werden können, besteht eine wesentliche Randbedingung nationaler und europäischer HF-Vorschriften darin, dass diese RFID-Systeme andere Funkdienste nicht stören oder beeinträchtigen dürfen. Die geforderte Rücksichtnahme auf andere Funkdienste schränkt die Auswahl der Arbeitsfrequenz für RFID-Systeme sowie deren Sendeleistung in starkem Maße ein. Aufgrund dieser nationalen und europäischen HF-Vorschriften ist die maximale Sendeleistung bezogen auf die jeweilige Frequenz stark begrenzt.

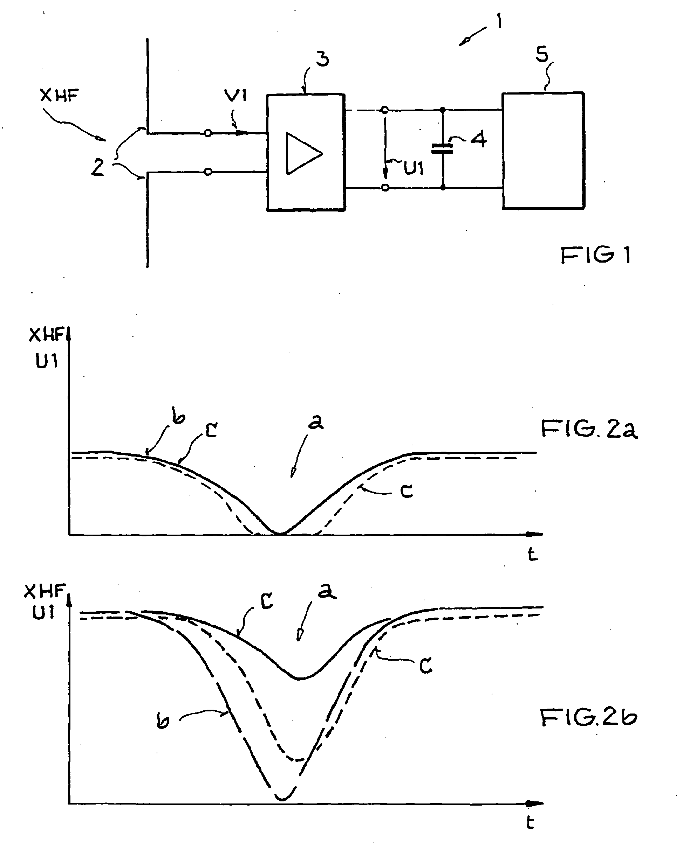

Figur 1 zeigt ein schematisches Blockschaltbild einer bekannten Detektorschaltung 1, die im Empfangspfad 6 eines Transponders angeordnet ist. Die Detektorschaltung 1 enthält eine eingangsseitige Dipolantenne 2 zur Aufnahme eines gesendeten hochfrequenten Trägersignals XHF. Über die Dipolantenne 2 wird abhängig von der Feldstärke des Trägersignals XHF ein hochfrequentes Signal V1 erzeugt, welches einem der Dipolantenne 2 nachgeschalteten Gleichrichter 3 zugeführt wird. Zwischen den Ausgängen des Gleichrichters 3 ist ein Signalkondensator 4 angeordnet. Über dem Signalkondensator 4 fällt eine Spannung U1 ab, die aus dem empfangenen und gleichgerichteten Signal V1 abgeleitet ist und die somit ein Maß für die Feldstärke des hochfrequenten Trägersignals XHF ist. In dieser Signalspannung U1 ist einerseits die Dateninformation enthalten, die im hochfrequenten Trägersignal XHF moduliert vorliegt. Darüber hinaus enthält die Signalspannung U1 auch die Energie zur die Energieversorgung des Transponders. Zur Auswertung der Signalspannung U1 und somit zur Gewinnung der Dateninformation ist ferner eine Auswerteschaltung 5 vorgesehen.

Bei den meisten RFID-Systemen erfolgt die Datenübertragung unter Verwendung von Pulspausen-modulierten Signalen. Bei solchen Systemen werden mittels der Amplituden-modulierten Trägerwelle XHF digitale Daten zwischen der Basisstation und dem Transponder ausgetauscht. Die einzelnen Datenbits werden durch Pulspausenmodulation des Trägersignals XHF erzeugt, indem der Sender in der Basisstation für bestimmte Zeitspannen ein elektromagnetisches Feld einschaltet und anschließend wieder ausschaltet. Empfängt der Transponder das so modulierte Trägersignal, dann wird im Transponder eingangsseitig eine von der Feldstärke des Trägersignals XHF abgeleitete Signalspannung U1 erzeugt, welches Spannungseinbrüche an solchen Stellen aufweist, bei denen senderseitig das elektromagnetische Feld ausgeschaltet war. Ein solcher Spannungseinbruch wird nachfolgend auch als "Notch" bezeichnet. Die Dateninformation liegt nun in der Zeitspanne zwischen zwei solchen Spannungseinbrüchen. Die Länge einer solchen Zeitspanne bestimmt damit die Wertigkeit des entsprechenden Datenbits. Dabei kann zum Beispiel vorgesehen sein, dass eine erste Zeitspanne einer logischen "0" entspricht und eine zweite Zeitspanne, die länger als die erste Zeitspanne ist, einer logischen "1" entspricht. Die Feldlücke, bei der der Sender der Basisstation ausgeschaltet ist und damit kein elektromagnetisches Trägersignal sendet, bildet so gewissermaßen einen Separator zwischen zwei aufeinanderfolgenden Datenbits.

Mit den zunehmenden Sicherheitsanforderungen bei der Identifikation werden bei modernen RFID-Systemen immer höhere Datenübertragungsraten benötigt, um die jeweiligen Zeiten, während denen eine Identifikation stattfindet, möglichst kurz zu halten, um damit in immer kürzeren Zeitspannen eine Vielzahl von Informationspaketen auf einer Trägerwelle moduliert zu übertragen. Bei mit niedriger Leistung arbeitenden RFID-Systemen werden daher ungeachtet der begrenzten Sendeleistung immer höhere Reichweiten für die Datenkommunikation gefordert. Um dieser Forderung Genüge zu leisten, muss der Transponder auch noch bei sehr schwachen elektrischen und/oder magnetischen Feldern ausreichend Energie aus dem Feld des gesendeten Trägersignals XHF extrahieren. Dies ist aber nur dann möglich, wenn der Gleichrichter 3 des Transponders einerseits eine möglichst hohe Effizienz aufweist. Ferner müssen auch noch sehr geringe Signalspannungen U1 detektiert und nachgebildet werden können.

Moderne Transponder müssen also sowohl in einem Nahfeld, bei dem ein großes elektrischen Feld des Trägersignals vorliegt, und bei einem Fernfeld, bei dem das elektrische Feld mitunter sehr stark abgeschwächt ist, betreibbar sein. Bei diesem Betrieb eines Transponders sowohl im Nahfeld als auch im Fernfeld ergibt sich allerdings folgendes Problem, welches anhand der Figur 2 beschrieben wird:
Figur 2 zeigt den Verlauf der Hüllkurve des gesendeten hochfrequenten Trägersignals XHF sowie den Verlauf der Signalspannung U1, der in diese Hüllkurve möglichst gut nachbilden soll. Figur 2(a) zeigt dabei den Kurvenverlauf bei einem im Fernfeld betriebenen Transponder und Figur 2(b) zeigt den Kurvenverlauf bei einem im Nahfeld betriebenen Transponder. Mit a ist dabei jeweils der Notch der Hüllkurve beziehungsweise der Signalspannung bezeichnet. Mit b ist die Hüllkurve des hochfrequenten Trägersignals XHF und mit c die dieses Trägersignal nachbildende Signalspannung U1 bezeichnet. Dabei bezeichnet die durchgezogene, mit c bezeichnete Linie die Kennlinie der Signalspannung im Falle eines geringen Entladestromes und die gestrichelt dargestellte, mit c bezeichnete Linie die entsprechende Signalspannung-Kennlinie bei hohem Entladestrom. Dabei gilt: Die Signalspannung c soll den Verlauf des Trägersignals beziehungsweise dessen Hüllkurve b möglichst gut nachbilden, wobei hier wesentlich ist, dass die als Separator fungierenden Spannungseinbrüche a in der Signalspannung c auch sehr gut ausgeprägt sind.

Die Hüllkurve b des Trägersignals XHF weist für einen im Fernfeld betriebenen Transponder einerseits eine geringe Amplitude auf und bildet andererseits einen ausreichend breiten Notch a aus (Figur 2(a)). Um nun die entsprechenden Spannungseinbrüche a bei solch geringen Spannungsamplituden der Signalspannung U1 noch detektieren zu können, weist der Detektor 1 des Transponders typischerweise eine geringe Zeitkonstante auf, um so auch sehr geringe Notches als solche zu erkennen. Zur Realisierung einer geringen Zeitkonstante wird daher ein Kondensator 4 mit möglichst geringer Kapazität verwendet. Dadurch ist der durch den Kondensator 4 bereitgestellte Entladestrom ebenfalls sehr gering. Im Fernfeld reicht dieser geringe Entladestrom auch aus, um die Hüllkurve b des Trägersignals XHF sehr gut nachzubilden. Ein größerer Entladestrom hätte zudem den Nachteil, dass der Transponder sehr viel mehr Leistung benötigte, was insgesamt zu einer Reduzierung der Reichweite für die Datenkommunikation führen würde.

Problematisch ist allerdings die Nachbildung der Hüllkurve b des Trägersignals für einen im Nahfeld betriebenen Transponder (Figur 2(b)). Im Nahfeld ist die Amplitude der Hüllkurve b sehr viel größer, so dass die Flanken der Hüllkurve b im Bereich der einzelnen Notches a auch sehr viel steiler ausgebildet sind. Zur Erzeugung der Signalspannung c wäre nun ein sehr hoher Entladestrom erforderlich (siehe gestrichelte Kennlinie), um der schnellen Änderung der Hüllkurve zu folgen. Aufgrund des vorhandenen kleinen Kondensators 4 werden vom Detektor aber nur geringe Entladeströme bereitgestellt. Dies führt unmittelbar dazu, dass die Spannungseinbrüche c gar nicht oder lediglich ansatzweise nachgebildet werden. Dies liegt daran, dass die die Hüllkurve b nachbildende Signalspannung c nicht mehr definiert auf Null sinkt, da aufgrund der geringen Kapazität nur sehr geringe Entladeströme vorhanden sind, die aber die Signalspannung in dem sich im Bereich des Notches a sehr schnell ändernden Trägersignal nicht in der dafür benötigten kurzen Zeit nachbilden können. Die Spannungseinbrüche sind daher im Falle eines im Nahfeld betriebenen Transponders nicht mehr als solche erkennbar. Dies führt unmittelbar zu Fehlern bei der Detektion der entsprechenden Bitinformation, so dass bei dieser Konstellation mit einer erhöhten Bitfehlerrate (BER = Bit Error Rate) zu rechnen ist.

Um dies zu vermeiden, werden bei vielen RFID-Systemen, die sowohl im Fernfeld als auch im Nahfeld eines elektromagnetischen Signals betrieben werden sollen, sehr hohe Entladeströme für den Signaldetektor verwendet, unabhängig davon, ob sich der Transponder nun im Nahfeld oder im Fernfeld befindet. Dies hat allerdings den gravierenden Nachteil, dass dadurch die Reichweite der Datenkommunikation stark eingeschränkt ist, da nun auch im Fernfeld ein hoher Entladestrom verbraucht wird.

Um dies zu vermeiden, werden bestehende Systeme daher meist so ausgelegt, dass ein möglichst guter Kompromiss von Betrieb im Fernfeld und Betrieb Im Nahfeld gegeben ist. Allerdings werden damit die Nachteile, wie geringere Reichweite, höhere Bitfehlerrate, größerer Energieverbrauch, ebenfalls in Kauf genommen werden.

Aus Möschwitzer, Albrecht: "Halbleiterelektronik" 1987, Dr. Alfred Hüthig Verlag, Heidelberg, XP002505528 sind mehrer Kontstantstromquellen unter anderem auch in MOS- Technik bekannt. Hierbei wird ein Bezugsstrom in einen Referenzstrom gespiegelt.

D'es ist ein Zustand, den es verständlicherweise zu vermeiden gilt.

Vor diesem Hintergrund liegt der vorliegenden Erfindung die Aufgabe zugrunde, einen sowohl im Fernfeld als auch im Nahfeld betreibbaren Transponder möglichst ohne Beeinträchtigung der Reichweite der Datenkommunikation und/oder mit möglichst geringer Bitfehlerrate anzugeben.

Erfindungsgemäß wird diese Aufgabe durch eine Schaltungsanordnung zur Lastregelung mit den Merkmalen des Patentanspruchs 1, eine Detektorschaltung zur Signaldetektion mit den Merkmalen des Patentanspruchs 11, einen Transponder mit den Merkmalen des Patentanspruchs 20 sowie ein Verfahren zum Betreiben dieses Transponders mit den Merkmalen des Patentanspruchs 23 gelöst.

Demgemäß ist vorgesehen:
- eine Transponderschaltung mit einer Schaltungsanordnung mit in einem Empfangspfad eines Transponders angeordneten Schaltungstellen, mit einem Eingangspfad, Ober den ein erstes Spannungssignals abgreifbar ist, mit einem in dem Eingangspfad angeordneten Spannungssensor zum Messen des ersten Spannungssignals, mit zumindest einem Ausgangspfad, Ober den ein Entladestromsignal abgreifbar ist, mit zumindest einer zwischen dem Eingangspfad and dem Ausgangspfad angeordneten steuerbaren Hilfsstromquelle zur Bereitstellung des mindestens einen Entladestromsignals die steuerseitig mit einem Ausgang des Spannungssensor derart verbunden ist, lass mit zunehmender Spannung des ersten Spannungssignals der Wert des Entladestromslgnals exponentiell zunimmt und hierdurch eine Lastregelung bewirkt wird (Patentanspruch 1).
- Einen Transponder, insbesondere passiver und/oder semipassiver Transponder, mit einer zwischen einem ersten und einem zweiten Eingang des Transponders angeordneten Antenne zur Aufnahme eines hochfrequenten elektromagnetischen Trägersignals zur Energieversorgung des Transponders sowie zur Datenkommunikation mit einer Sendestation, mit einem der Antenne nachgeschalteten Empfangspfad, in dem eine Demodulatorschaltung zur Demodulation eines empfangenen, von dem Trägersignal abgeleiteten, modulierten Signals angeordnet ist, wobei die Demodulatorschaltung eine erfindungsgemäße Transponderschatung aufweist (Patentanspruch 19).
- Ein Verfahren zum Betreiben eines erfindungsgemaf3en Transponders nach einem, mit einem ersten Betriebsmodus, bei dem der Transponder in einem Nahfeld eines hochfrequenten elektromagnetischen Trägersignal betrieben wird, mit einem zweiten Betriebsmodus, bei dem der Transponder in einem Fernfeld des hochfrequenten elektromagnetischen Trägersignal berieben wird, wobei der Entladestrom durch das Schaltungsteil und/oder durch die Auswerteschaltung im ersten Betriebsmodus mit zunehmender Signalspannung, insbesondere unter Verwendung einer erfindungsgemäßen Transponderschaltung. (Patentanspruch 22)

Die der vorliegenden Erfindung zugrunde liegende Idee besteht darin, bei einem im Nahfeld betriebenen Transponder einen zusätzlichen Entladestrom bereitzustellen, der eigens für Entladevorgänge innerhalb des Detektors im Nahfeldbetrieb verwendet wird. Auf diese Weise lassen sich die entsprechenden Kapazitäten unter Verwendung des Entladestroms sehr schnell auf- beziehungsweise entladen. Die Signalspannung, welche ein Maß für den Verlauf des Feldes des Trägersignals ist, bildet dann sowohl im Nahfeld als auch im Fernfeld das Trägersignal insbesondere im Bereich eines Notches sehr gut nach. Damit lassen sich sowohl für das Nahfeld als auch für das Fernfeld die Notches, die für die Demodulation und Dekodierung der Datenbits erforderlich sind, sehr gut erkennen.

Hierfür ist lediglich ein Spannungssensor und zumindest eine Entladestromquelle erforderlich. Der Spannungssensor misst ein Spannungssignal als Maß für das Feld des hochfrequenten Trägersignals. Abhängig von diesem Spannungssignal erzeugt die Hilfsstromquelle einen Entladestrom.

Durch geeignete Ausgestaltung der Hilfsstromquelle wird ein Entladestrom lediglich im Falle eines im Nahbereich betriebenen Transponders erzeugt, wobei die Erkenntnis darüber, dass der Nahbereich vorliegt, aus dem gemessenen Spannungssignal selbst abgeleitet wird.

Dies ermöglicht eine Auslegung des Transponders beziehungsweise seiner Detektorschaltung für einen solchen Transponder auf eine optimale Reichweite. Nichts desto trotz weist der Transponder trotz optimierter Reichweite auch eine minimale Bitfehlerrate für den Betrieb im Nahfeld auf.

Durch Verwendung einfacher Dioden und MOS-Transistoren für den Spannungssensor und die Hilfsstromquelle lässt sich die erfindungsgemäße Schaltungsanordnung zur Lastregelung schaltungstechnisch auf sehr einfache und platzsparende Weise realisieren.

Vorteilhafte Ausgestaltungen und Weiterbildung der Erfindung sind den Unteransprüchen sowie der Beschreibung unter Bezugnahme auf die Zeichnung entnehmbar.

Typischerweise ist die Hilfsstromquelle als Stromsenke zum Bereitstellen eines Entladestroms für den Signalkondensator bzw. anderer Schaltungsteile ausgebildet. Das Aufladen des Signalkondensators wird vorteilhafterweise dynamisch von dem elektromagnetischen Feld selbst bzw. dem davon abgeleiteten aufgenommenen Signal vorgenommen.

In einer vorteilhaften Ausgestaltung weist der Spannungssensor zumindest eine Diode auf, die bezüglich eines Eingangsanschlusses, an dem das Spannungssignal abgreifbar ist, in Flussrichtung geschaltet ist. Die Dioden des Spannungssensors sind vorteilhafterweise als Transistordioden ausgebildet. Vorteilhafterweise wird dabei zumindest eine Diode des Spannungssensors durch eine Diode der Stromspielschaltung gebildet ist und mit den übrigen Diode des Spannungssensors in Reihe geschaltet.

In einer ebenfalls vorteilhaften Ausgestaltung weist die Stromsenke eine Stromspiegelschaltung auf. Die Stromspiegelschaltung ist eingangsseitig im Eingangspfad der erfindungsgemäßen Schaltung zur Laststromregelung sowie mit einem Ausgang des Spannungssensors
Besonders vorteilhaft ist es, wenn die Transistoren der Stromsenke und des Spannungssensors als MOS-Transistoren, insbesondere als CMOS-Transistoren ausgebildet sind. Vorteilhafterweise sind zumindest einige dieser MOS-Transistoren als MOS-Dioden ausgebildet. Insbesondere als Transistordioden ausgebildete MOSFETs weisen gegenüber herkömmlichen PN-Dioden eine geringere Temperaturabhängigkeit auf.

In einer sehr vorteilhaften Ausgestaltung ist zumindest eine der Dioden des Spannungssensors und/oder zumindest eine der Dioden der Stromsenke als pn-Dioden, als MOS-Dioden oder als Schottky-Dioden ausgebildet ist.

Vorteilhafterweise weist der Spannungssensors drei zueinander in Reihenschaltung angeordnete Dioden auf. Diese Anzahl bietet insbesondere für ein definierte Auslegung der Schaltungsanordnung auf ein gegebenes Nahfeld bzw. Fernfeld eine optimale Diodenkennlinie.

Die Stromkennlinie für den von der Stromsenke bereitgestellten Entladestrom lässt sich auf sehr einfache Weise über die W/L-Verhältnisse der Transistoren der Stromspiegelschaltung einstellen. Auf diese Weise ist die Schaltungsanordnung durch geeignete Wahl der Flächenverhältnisse sehr elegant auf die gewünschte Reichweite und damit auf die gewünschte Applikation des Transponders einstellbar.

Die Stromsenke erzeugt vorteilhafterweise einen Entladestrom, der mit zunehmender Spannung des gemessenen Spannungssignals mehr oder weniger exponentiell zunimmt. Die Stromsenke erzeugt somit einen Entladestrom, der näherungsweise die Kennlinie einer Diode aufweist. Bei einem Übergang vom Fernfeld in das Nahfeld steigt der von der Stromsenke bereitgestellte Entladestrom sukzessive an. Auf diese Weise lässt sich ein sehr sanfter kontinuierlicher Übergang zwischen dem Betrieb im Fernfeld und Nahfeld gewährleisten, da keine abrupten Übergänge zwischen diesen beiden Bereichen vorhanden sind. Durch die Vermeidung von abrupten Übergängen lassen sich daher unerwünschte Verzerrungen bei der nachgebildeten Signalspannung vermeiden. Darüber hinaus lassen sich damit auch geringerer Bitfehlerraten realisieren.

Die Erfindung wird nachfolgend anhand der in den schematischen Figuren der Zeichnung angegebenen Ausführungsbeispiele näher erläutert. Es zeigen dabei:
- Figur 1: ein schematisches Blockschaltbild einer bekannten Detektorschaltung für einen Transponder;
- Figur 2: die Kurvenverläufe der Hüllkurve des hochfrequenten Trägersignals und die davon abgeleitete Signalspannung im Falle eines im Fernfeld (a) und im Nahfeld (b) betriebenen Transponders;
- Figur 3: ein schematisches Blockschaltbild einer erfindungsgemäßen Schaltungsanordnung zur Lastreglung im Empfangspfad eines Transponders;
- Figur 4: anhand eines Schaltbildes den schaltungstechnischen Aufbau der erfindungsgemäßen Schaltungsanordnung zur Laststromregelung;
- Figur 5: eine Stromspannungskennlinie für den Strom im Eingangspfad der erfindungsgemäßen Schaltungsanordnung;
- Figur 6: der Kurvenverlauf der Hüllkurve eines hochfrequenten elektromagnetischen Trägersignals sowie die davon abgeleitete Signalspannung im Falle eines im Nahfeld betriebenen Transponders;
- Figur 7: Kennlinien zur Darstellung der Temperaturabhängigkeit von MOS-Dioden und PN-Dioden.

In den Figuren der Zeichnung sind gleiche beziehungsweise funktionsgleiche Elemente und Signale - sofern nichts anderes angegeben ist - mit denselben Bezugszeichen versehen worden.

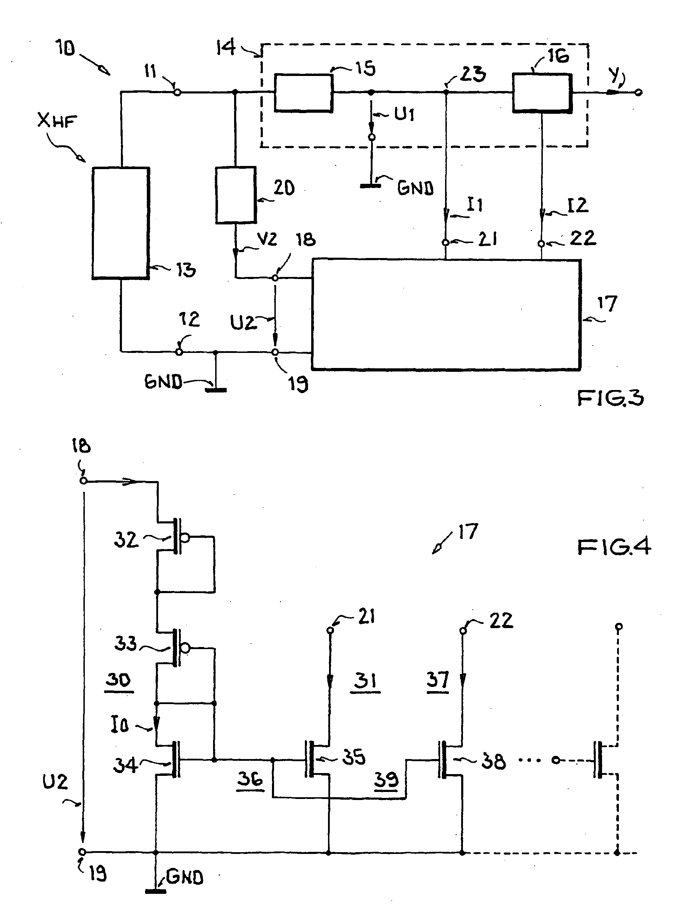

Figur 3 zeigt ein schematisches Blockschaltbild einer erfindungsgemäßen Detektorschaltung 10 zur Lastreglung im Empfangspfad 24 eines nur ausschnittsweise dargestellten Transponders. Der Transponder weist Eingangsanschlüsse 11, 12 auf. Im vorliegenden Ausführungsbeispiel sei angenommen, dass der Eingangsanschluss 12 mit dem Bezugspotenzial GND beaufschlagt ist. Zwischen den Eingangsanschlüssen 11, 12 ist eine Antenne 13 angeordnet, die der Aufnahme eines von dem Feld eines gesendeten hochfrequenten Trägersignals XHF abgeleitetes Signal V1 dient. Die Antenne 13 kann als Dipolantenne zur Aufnahme eines magnetisch eingekoppelten Trägersignals XHF oder als Spulenantenne zur Aufnahme eines induktiv eingekoppelten Trägersignals XHF ausgebildet sein.

Im Empfangspfad 24 des Transponders ist eine erfindungsgemäße Detektorschaltung 10 angeordnet. Die Detektorschaltung 10 weist ferner einen analogen Schaltungsteil 14 zur Detektion und Auswertung der Signalspannung U1 auf. Der Schaltungsteil 14 ist eingangsseitig mit den Eingangsanschlüssen 11, 12 verbunden ist. Dem Schaltungsteil 14 wird eingangsseitig somit das von dem hochfrequenten Trägersignal XHF abgeleitete Signal V1 zugeführt.

Im vorliegenden Ausführungsbeispiel enthält das Schaltungsteil 14 einen RSSI-Verstärker 15 (RSSI = Received Signal Strength Indicator), der eingangsseitig mit dem Eingangsanschluss 11 verbunden ist. Der RSSI-Verstärker 15 weist, ähnlich wie die Schaltung in Figur 1, einen Gleichrichter sowie den Signalkondensator (beide nicht dargestellt) auf. Der RSSI-Verstärker 15 stellt ausgangsseitig die analoge Signalspannung U1 bereit. Die analoge Signalspannung U1 ist dabei aus dem Signal V1 und damit aus dem hochfrequenten Trägersignal XHF abgeleitet und weist idealerweise deutlich erkennbare Spannungseinbrüche für die Kodierung der Dateninformationen auf.

Dem RSSI-Verstärker 15 ist eine Auswerteschaltung 16 nachgeschaltet, der somit die analoge Signalspannung U1 zugeführt wird. Die Auswerteschaltung 16 wertet die in der analogen Signalspannung U1 enthaltenen Dateninformationen aus und erzeugt ausgangsseitig ein digitales Signal Y, in dem die entsprechenden Datenbits des gesendeten Trägersignals XHF digital kodiert vorliegen.

Erfindungsgemäß ist ferner eine Schaltungsanordnung 17 zur Laststromregelung vorgesehen. Die Schaltungsanordnung 17 weist zwei Eingänge 18, 19 auf, die mit den Eingangsanschlüssen 11, 12 verbunden sind. Zwischen dem Eingangsanschluss 11 und dem Anschluss 18 ist ferner eine Gleichrichterschaltung 20 geschaltet. Der Schaltungsanordnung 17 wird somit über den Eingang 18 das von dem hochfrequenten Trägersignal XHF bzw. dem Signal V1 abgeleitete Signal V2 in gleichgerichteter und gegebenenfalls gefilterter und verstärkter Form zugeführt.

Es sei angenommen, dass der RSSI-Verstärker 15 eine möglichst geringe Zeitkonstante und damit eine möglichst geringe Kapazität aufweist. Ferner sei angenommen, dass die Gleichrichterschaltung 20 eine möglichst hohe Zeitkonstante und damit eine möglichst hohe Kapazität aufweist. Typischerweise weist die Gleichrichterschaltung 20 einen mehrstufigen, insbesondere 5-stufigen Verstärker auf.

Die Schaltungsanordnung 17 zur Laststromregelung weist ferner zwei Ausgänge 21, 22 auf. Der erste Ausgang 21 ist mit einem Abgriff 23 zwischen dem RSSI-Verstärker 15 und der Auswerteschaltung 16 verbunden. Der zweite Ausgang 22 ist mit einem Anschluss der Auswerteschaltung 16 verbunden. Über die Anschlüsse 21, 22 ist dem Schaltungsteil 14 jeweils ein Entladestrom I1, I2 entnehmbar bzw. zuführbar. Dieser Entladestrom I1, I2 kann dazu genutzt werden, die entsprechenden Kapazitäten im RSSI-Verstärker 15 beziehungsweise in der Auswerteschaltung 16 schneller zu entladen.

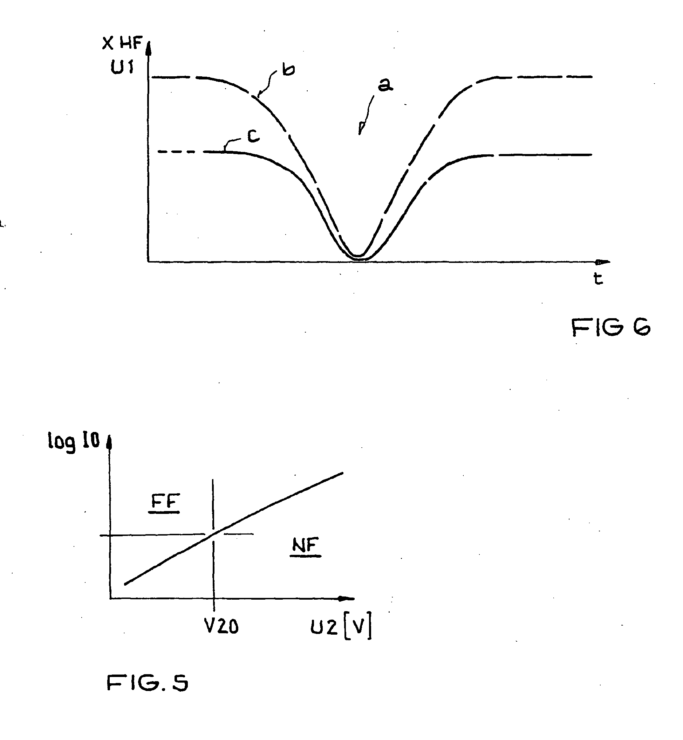

Der schaltungstechnisch genaue Aufbau der erfindungsgemäßen Schaltung 17 zur Laststromregelung sowie deren Funktion innerhalb der Detektorschaltung 10 wird nachfolgend anhand der Figuren 4 und 5 detailliert beschrieben. Figur 4 zeigt anhand eines Schaltbildes den schaltungstechnischen Aufbau der erfindungsgemäßen Schaltungsanordnung zur Laststromregelung.

Die Schaltungsanordnung 17 weist einen Eingangspfad 30 sowie einen Ausgangspfad 31 auf. Der Eingangspfad 30 ist zwischen den Anschlüssen 18, 19 angeordnet. Der Ausgangspfad 31 ist mit dem Ausgangsanschluss 21 sowie mit dem Anschluss 19 für das Bezugspotenzial GND verbunden. Im Lastpfad 30 sind drei Transistoren 32 - 34 vorgesehen, die über ihre gesteuerten Strecken in Reihe zueinander angeordnet sind. Im Lastpfad 31 ist ein weiterer Transistor 35 angeordnet. Die jeweils mit dem Bezugspotenzial GND verbundenen Transistoren 34, 35 im Eingangspfad 30 und Ausgangspfad 31 bilden einen Stromspiegel 36, wobei der eingangsseitige Transistor 34 die Stromspiegeldiode bildet. Die beiden übrigen Transistoren 32, 33 im Eingangspfad 30 sind als Transistordioden ausgebildet und bezüglich des Eingangsanschlusses 18 in Flussrichtung geschaltet.

Zusätzlich oder alternativ kann ein zweiter Ausgangspfad 37 vorgesehen sein, der mit dem Anschluss 22 verbunden ist. In diesem Ausgangspfad 37 ist ein MOS-Transistor 38 angeordnet, der steuerseitig mit dem Steueranschluss des Transistors 34 verbunden ist und der somit mit diesem Transistor 34 einen weiteren Stromspiegel 39 bildet.

Alle Transistoren 32 - 35, 38 sind als MOSFET-Transistoren ausgebildet, wobei die Transistoren 34, 35, 38 der Stromspiegel 36, 39 als NMOS-Transistoren und die Transistordioden 32, 33 als PMOS-Transistoren ausgebildet sind.

Die beiden PMOS-Transistoren 32, 33 sowie der als Transistordiode verschaltete NMOS-Transistor 34 bilden zusammen einen Stromsensor. Der Stromspiegel 36 mit den beiden NMOS-Transistoren 34, 35 bildet eine erste Stromsenke zur Erzeugung des Entladestroms I1 und der Stromspiegel 39 mit den beiden NMOS-Transistoren 34, 38 bildet eine zweite Stromsenke zur Erzeugung des Entladestroms I2. Über das W/L-Verhältnis der Stromspiegeltransistoren 34, 35 beziehungsweise 34, 38 lässt sich in an sich bekannter Weise der Wert eines jeweiligen Entladestroms I1, I2 gezielt einstellen. Diese Entladeströme I1, I2 sind unter Berücksichtigung der Flächenverhältnisse jeweils abhängig von dem eingangsseitig durch den Stromspiegel 36, 39 fließenden Strom I0. Dieser Strom I0 ist wiederum abhängig von den am Eingangsanschluss 18 eingekoppelten Spannungssignal V2 beziehungsweise der zwischen den Eingangsanschlüssen 18, 19 abfallenden Spannung U2 = V2 - GND. Die Spannung U2 ist ferner auch ein Maß für die Signalspannung U1, welche am Signalkondensator abfällt und die es nachzubilden gilt.

Figur 5 zeigt die Stromspannungskennlinie für den von dem Stromsensor 31, 32 gemessenen Strom I0 bezogen auf diese Spannung U2. Der Eingangsstrom I0 ist dabei auf der Ordinate logarithmisch aufgetragen. Die Kennlinie des durch die beiden PMOS-Dioden 32, 33 fließenden Strom I0 bildet in logarithmischer Darstellung mit zunehmender Spannung U2 eine weitgehend linear zunehmende Kennlinie. Auf der die Spannung U2 darstellenden Abszisse ist ein Spannungswert V20 angegeben. Dieser Spannungswert V20, der im vorliegenden Beispiel zum Beispiel 1,5 V beträgt, trennt das Fernfeld FF und das Nahfeld NF voneinander, wobei mit U2 < V20 das Fernfeld FF und mit U2 > V20 das Nahfeld NF definiert ist. Für eine Spannung von V20 = 1,5 V ergibt sich zum Beispiel ein Stromwert I0 = 500 pA. Im Fernfeld FF beträgt der Strom somit I0 < 500 pA und im Nahfeld NF beträgt der Strom I0 > 500 pA.

Aufgrund der logarithmischen Darstellung des Stromes I0 ergibt sich somit im Fernfeld FF ein verschwindend geringer Strom I0, der jedenfalls gegenüber einem von dem Schaltungsteil 14 bereitgestellten Detektorstrom vernachlässigbar gering ist. Hingegen wird im Nahfeld NF sehr schnell ein immer größer werdender, exponentiell mit der Spannung U2 zunehmender Strom I0 bereitgestellt, der gegenüber einem von dem Schaltungsteil 14 bereitgestellten Detektorstrom deutlich größer ist. Die in Figur 5 dargestellte Kennlinie repräsentiert somit gewissermaßen eine Diodenkennlinie. Im Fernfeld FF wird somit der Detektorstrom nahezu allein von dem Schaltungsteil 14 selbst bereitgestellt, wohin gegen im Nahfeld NF der Detektorstrom zum Entladen und damit zum Nachbilden der analogen Signalspannung U1 hauptsächlich über die erfindungsgemäße Schaltungsanordnung 17 zur Laststromregelung beziehungsweise deren Stromsenken 36, 39 bereitgestellt wird.

Über die jeweiligen Stromspiegel 36, 39 wird abhängig von den jeweiligen Flächenverhältnissen der Transistoren 34, 35 bzw. 34, 38 ein entsprechend der Strom I0 gespiegelter Entladestrom I1, I2, der in etwa eine ähnliche Kennlinie wie in Figur 5 aufweist, erzeugt. Ein weiterer Vorteil der erfindungsgemäßen Schaltungsanordnung 17 zur Laststromregelung besteht darin, dass zusätzlich auch weiteren Schaltungsblöcken, welche zum Beispiel auf das Fernfeld und damit sehr stromarm ausgelegt sind, nunmehr im Nahfeld einen sehr viel höheren Strom zur Verfügung gestellt wird. Damit wird deren Funktionalität und Sicherheit in vorteilhafter Weise erweitert. Dies kann durch Erweiterung der erfindungsgemäßen Schaltungsanordnung 17 beispielsweise durch Vorsehen weiterer Stromspiegel (in Figur 4 gestrichelt angedeutet) erreicht werden.

Der Spannungswert V20 und damit die Festlegung der Bereiche für das Fernfeld FF und das Nahfeld NF kann je nach Applikation unterschiedlich sein. Für die Definition von Fernfeld und Nahfeld kann beispielsweise die maximale Reichweite herangezogen werden. Die maximale Reichweite hängt insbesondere von der Empfängerempfindlichkeit des Transponders ab und bezeichnet die theoretisch mögliche, weiteste Reichweite, bei der noch ein Trägersignal und die darin vorhandenen Notches definiert als solche erkannt werden können. Dies hängt selbstverständlich von der Sendeleistung des Senders und/oder von der Frequenz des Trägersignals ab. Beispielsweise könnte das Nahfeld solche Spannungswerte bezeichnen, die geringer als die 50%-ige maximale Reichweite betragen. In diesem Falle würde das Fernfeld für Spannungswerte im Bereich oberhalb der 50%-igen maximalen Reichweite liegen.

Figur 6 zeigt den Kurvenverlauf der Hüllkurve eines hochfrequenten elektromagnetischen Trägersignals sowie die davon abgeleitete Signalspannung im Falle eines im Nahfeld betriebenen Transponders.

Mittels der erfindungsgemäßen Schaltung 17 zur Laststromregelung lässt sich bei einem im Nahfeld betriebenen Transponder die Hüllkurve b des Trägersignals XHF optimal nachbilden. Dies ist deshalb möglich, da im Nahfeld ein zusätzlicher Entladestrom I1, I2 bereitgestellt wird, der einen Entladestrom aus dem Schaltungsteil 14 beziehungsweise der Auswerteschaltung 16 zieht und damit den sehr steilen Abfall bzw. Anstieg der Hüllkurve b im Bereich eines Notches a sehr schnell und effektiv nachbildet. Darüber hinaus wird damit auch sichergestellt, dass im Bereich eines Notches a die Signalspannung U1 auf 0 V abfällt oder zumindest relativ nahe an 0 V heranreicht, wodurch eine sehr hohe Erkennungswahrscheinlichkeit eines jeweiligen Notches a und damit sehr geringe Bitfehlerraten (BER) realisierbar sind.

Die Dioden 32, 33, 34 können entweder als PN-Dioden oder MOS-Dioden ausgebildet sein. Vorteilhafterweise werden typischerweise in Diodenschaltungen geschaltete MOS-Transistoren verwendet, da diese MOS-Dioden gegenüber PN-Dioden eine geringere Temperaturabhängigkeit aufweisen und daher gegenüber PN-Dioden vorzuziehen sind. Figur 7 zeigt eine Kennlinien zur Darstellung der Temperaturabhängigkeit von MOS-Dioden (d) und PN-Dioden (e).

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

Insbesondere sei die Erfindung nicht auf die in den Figuren 3, 4 angegebenen, schaltungstechnischen Varianten beschränkt. Es versteht sich, dass durch geeignete Variation der dort angegebenen Schaltungsanordnung beliebig viele weitere Schaltungsvarianten angegeben werden können, ohne dass vom grundlegenden Prinzip der Erfindung abgewichen wird. Darüber hinaus lassen sich insbesondere bei den Transistoren durch Austauschen der Leitfähigkeitstypen N gegen P und umgekehrt sowie durch Variation der Anzahl, der Art und der Auslegung der verwendeten Bauelemente beliebig viele weitere Schaltungsvarianten angeben. Es versteht sich ferner, dass statt der Verwendung von PN-Dioden oder MOS-Dioden deren Funktionalität auch durch andere Bauelemente mit gleichrichtender Funktionalität realisiert werden kann.

Die Erfindung sei ferner nicht auf die angegebenen Zahlenangaben beschränkt, diese wurden beispielhaft lediglich dem besseren Verständnis halber angegeben, sollen aber den Schutzbereich nicht dahingehend einschränken.

### Bezugszeichenliste

- 1: Detektorschaltung
- 2: Dipolantenne
- 3: Gleichrichterschaltung
- 4: Signalkondensator
- 5: Auswerteschaltung

- 10: Detektorschaltung
- 11, 12: Eingangsanschlüsse
- 13: Antenne
- 14: Schaltungsteil zur Detektion und Auswertung der Signalspannung
- 15: RSSI-Verstärker
- 16: Auswerteschaltung
- 17: Schaltung zur Laststromregelung
- 18, 19: Eingänge der Schaltung zur Laststromregelung
- 20: Gleichrichter
- 21, 22: Ausgänge der Schaltung zur Laststromregelung
- 23: Abgriff
- 24: Empfangspfad

- 30: Eingangspfad
- 31: Ausgangspfad
- 32, 33: (PMOS-)Transistoren, Dioden
- 34: (NMOS-)Transistor, Diode
- 35: (NMOS-)Transistor
- 36: erster Stromspiegel
- 37: Ausgangspfad
- 38: (NMOS-)Transistor
- 39: zweiter Stromspiegel

- GND: Potenzial der Bezugsmasse
- FF: Fernfeld
- NF: Nahfeld
- I0: Eingangsstrom
- I1, I2: Entladeströme
- U1: Signalspannung
- U2: Spannung
- V1, V2: Signal, Potenzial
- V20: Spannungswert
- XHF: hochfrequentes Trägersignal
- Y: Ausgangssignal

- a: Spannungseinbruch, Notch
- b: Hüllkurve des hochfrequenten Trägersignals XHF
- c: analoge Signalspannung
- d: Kennlinie einer MOS-Diode
- e: Kennlinie einer PN-Diode

## Patentansprüche

1. Transponderschaltung mit einer Schaltungsanordnung (17) mit in einem Empfangspfad (24) eines Transponders (10) angeordneten Schaltungsteilen,
mit einem Eingangspfad (30), über den ein erstes Spannungssignal (V2, U2) abgreifbar ist,
mit einem in dem Eingangspfad (30) angeordneten Spannungssensor (32 - 34) zum Messen des ersten Spannungssignals (V2, U2),
mit zumindest einem Ausgangspfad (31, 37), über den ein Entladestromsignal (11, 12) abgreifbar ist,
mit zumindest einer zwischen dem Eingangspfad (30) und dem Ausgangspfad (31, 37) angeordneten steuerbaren Hilfsstromquelle (36, 39) zur Bereitstellung des mindestens einen Entladestromsignals (11, 12), die steuerseitig mit einem Ausgang des Spannungssensor (32 - 34) derart verbunden ist, dass mit zunehmender Spannung des ersten Spannungssignals (V2, U2) der Wert des Entladestromsignals (11, 12) exponentiell zunimmt und hierdurch eine Lastregelung bewirkt wird.

2. Transponderschaltung nach Anspruch 1,
**dadurch gekennzeichnet,**
**dass** die Hilfsstromquelle als Stromsenke zum Bereitstellen eines Entladestroms ausgebildet ist.

3. Transponderschaltung nach einem der vorstehenden Ansprüche,
**dadurch gekennzeichnet,**
**dass** der Eingangspfad (30) zwischen einem ersten Eingangsanschluss (18) zur Einkopplung eines Eingangspotenzials (V2) und einem zweiten Anschluss (19) mit einem Versorgungspotenzial (GND) angeordnet ist und dass der mindestens eine Ausgangspfad (31, 37) jeweils mit einem Ausgangsanschluss (21, 22) der Schaltungsanordnung (17), über den jeweils ein Entladestromsignals (I1, 12) abgreifbar ist, verbunden ist.

4. Transponderschaltung nach Anspruch 3,
**dadurch gekennzeichnet,**
**dass** der Spannungssensor (32 - 34) zumindest eine erste Diode (32 - 34) aufweist, die bezüglich dem ersten Eingangsanschluss (18) in Flussrichtung geschaltet ist.

5. Transponderschaltung einem der vorstehenden Ansprüche,
**dadurch gekennzeichnet,**
**dass** die Hilfsstromquelle (36, 39) zumindest eine Stromspiegelschaltung (36, 39) aufweist, die eingangsseitig im Eingangspfad (30) angeordnet ist und die ausgangsseitig mit jeweils einem Ausgangsanschluss (21, 22) der Schaltungsanordnung (17) verbunden ist.

6. Transponderschaltung nach Anspruch 5,
**dadurch gekennzeichnet,**
**dass** zumindest eine zweite Diode (34) des Spannungssensors (32 - 34) durch eine Diode (34) der Stromspielschaltung (36, 39) gebildet ist und mit den übrigen Diode (32, 33) des Spannungssensors (32 - 34) in Reihe geschaltet ist.

7. Transponderschaltung nach einem der vorstehenden Ansprüche,
**dadurch gekennzeichnet,**
**dass** zumindest eine der Dioden (32 - 34) des Spannungssensors (32 - 34) und/oder zumindest eine der Dioden (34) der Hilfsstromquelle (36, 39) als pn-Dioden, als MOS-Dioden oder als Schottky-Dioden ausgebildet ist.

8. Transponderschaltung nach einem der vorstehenden Ansprüche,
**dadurch gekennzeichnet,**
**dass** der Spannungssensors (32 - 34) drei zueinander in Reihenschaltung angeordnete Dioden (32 - 34) aufweist.

9. Transponderschaltung nach einem der vorstehenden Ansprüche,
**dadurch gekennzeichnet,**
**dass** die Transistoren (32 -35, 38) des Spannungssensors (32 - 34) und/oder die Transistoren der Hilfsstromquelle (34, 35, 38) als MOSFET-Transistoren, insbesondere als CMOS-Transistoren, ausgebildet sind.

10. Transponderschaltung nach einem der vorstehenden Ansprüche,
**dadurch gekennzeichnet,**
**dass** das Versorgungspotenzial (GND) ein Bezugspotenzial, insbesondere das Potenzial (GND) der Bezugsmasse, ist.

11. Transponderschaltung nach einem der vorstehen den Anspruche mit einer Detektorschaltung (10), insbesondere für den Empfangspfad (24) des Transponders (10),
- mit einem Eingang (11, 12) zur Aufnahme eines von einem hochfrequenten elektromagnetischen Trägersignal (XHF) abgeleiteten Signals (V1),
- mit einem Schaltungsteil (14) zur Detektion und Auswertung einer Signalspannung (U1), die einen dem Eingang (11, 12) nachgeschalteten Signalkondensator (4), an dem die von der Feldstärke des Trägersignals (XHF) abhängige Signalspannung (U1) abfällt, und eine dem Signalkondensator (4) nachgeschaltete Auswerteschaltung (16) zur Auswertung der Signalspannung (U1) aufweist,
**dadurch gekennzeichnet,**
**dass** die Schaltungsanordnung (17) zur Lastregelung im Falle, dass die Signalspannung (U1) betragsmäßig eine vorgegebene Schwelle (V20) überschreitet, das Entladestromsignal (I1, 12) aus dem Schaltungsteil (14) zuführt.

12. Transponderschaltung nach Anspruch 11,
**dadurch gekennzeichnet,**
**dass** als Maß der vorgegebene Schwelle (V20) der Signalspannung (U1) das an einem Eingang (18, 19) der Schaltungsanordnung (17) zur Lastregelung anliegende Spannungssignal (V2, U2) vorgesehen ist.

13. Transponderschaltung nach einem der Ansprüche 11 bis 12,
**dadurch gekennzeichnet,**
**dass** die Schaltungsanordnung (17) zur Lastregelung eingangsseitig mit dem Eingang (11, 12) der Detektorschaltung (10) verbunden ist und dass die Schaltungsanordnung (17) zur Lastregelung ausgangsseitig mit einem Abgriff (23) zwischen dem Signalkondensator (4) und der Auswerteschaltung (16) verbunden ist und das Entladestromsignal (I1) zum Entladen des Signalkondensators erzeugt.

14. Transponderschaltung einem der Ansprüche 11 bis 13,
**dadurch gekennzeichnet,**
**dass** die Schaltungsanordnung (17) zur Lastregelung eingangsseitig mit dem Eingang (11, 12) der Detektorschaltung (10) verbunden ist und dass die Schaltungsanordnung (17) zur Lastregelung ausgangsseitig mit der Auswerteschaltung (16) verbunden ist und das Entladestromsignal (I2) zum Entladen der Auswerteschaltung (16) erzeugt.

15. Transponderschaltung nach einem der Ansprüche 11 bis 14,
**dadurch gekennzeichnet,**
**dass** zwischen dem Eingang (11, 12) der Detektorschaltung (10) und dem Signalkondensator (4) eine erste Gleichrichterschaltung (3) zum Gleichrichten des von dem Trägersignal (XHF) abgeleiteten Signals (V1) vorgesehen ist.

16. Transponderschaltung nach einem der Ansprüche 11 bis 15,
**dadurch gekennzeichnet,**
**dass** in dem Schaltungsteil (14) ein RSSI-Verstärker (15) vorgesehen ist, der den Signalkondensator (4) enthält.

17. Transponderschaltung nach einem der Ansprüche 11 bis 16,
**dadurch gekennzeichnet,**
**dass** der Schaltungsanordnung (17) zur Lastregelung eingangsseitig eine zweite Gleichrichterschaltung (20), insbesondere ein mehrstufiger Gleichrichter (20), vorgeschaltet ist.

18. Transponderschaltung nach einem der Ansprüche 15 bis 17,
**dadurch gekennzeichnet,**
**dass** die zweite Gleichrichterschaltung (20) eine höhere Zeitkonstante als die erste Gleichrichterschaltung (15) beziehungsweise der den Signalkondensator (4) aufweisende RSSI-Verstärker (15) aufweist.

19. Transponder, insbesondere passiver und/oder semipassiver Transponder,
- mit einer zwischen einem ersten und einem zweiten Eingang (11, 12) des Transponders angeordneten Antenne (13) zur Aufnahme eines hochfrequenten elektromagnetischen Trägersignals (XHF) zur Energieversorgung des Transponders sowie zur Datenkommunikation mit einer Sendestation,
- mit einem der Antenne (13) nachgeschalteten Empfangspfad (24), in dem eine Demodulatorschaltung zur Demodulation eines empfangenen, von dem Trägersignal (XHF) abgeleiteten, modulierten Signals (V1) angeordnet ist,
**dadurch gekennzeichnet,**
**dass** die Demodulatorschaltung Transponderschaltung (10) nach einem der Ansprüche 11 bis 18 aufweist.

20. Transponder nach einem der Anspruch 19,
**dadurch gekennzeichnet,**
**dass** die Antenne (13) als Dipolantenne zum Empfang und zum Aussenden hochfrequenter magnetischer Trägersignale (XHF) ausgebildet ist.

21. Transponder nach einem der Ansprüche 19 oder 20,
**dadurch gekennzeichnet,**
**dass** ein Empfänger vorgesehen ist, der dazu ausgelegt ist ein als HF-Signal ausgebildetes Trägersignal (XHF), insbesondere ein HF-Signal mit einer Frequenz im Bereich von 100 MHz bis 4,5 GHz, zu empfangen.

22. Verfahren zum Betreiben eines Transponders nach einem der Ansprüche 19 bis 21,
- mit einem ersten Betriebsmodus, bei dem der Transponder in einem Nahfeld eines hochfrequenten elektromagnetischen Trägersignal (XHF) berieben wird,
- mit einem zweiten Betriebsmodus, bei dem der Transponder in einem Fernfeld des hochfrequenten elektromagnetischen Trägersignal (XHF) berieben wird,
**dadurch gekennzeichnet,**
**dass** der Entladestrom (I1, 12) durch das Schaltungsteil (14) und/oder durch die Auswerteschaltung (16) im ersten Betriebsmodus mit zunehmender Signalspannung U1, U2), insbesondere unter Verwendung einer Transponderschaltung nach einem der Ansprüche 1 bis 10, erhöht wird.

23. Verfahren nach Anspruch 22,
**dadurch gekennzeichnet,**
**dass** der Entladestrom (I1, I2) im ersten Betriebsmodus mit zunehmender Signalspannung (U1, U2) exponentiell erhöht wird.

24. Verfahren nach einen der Ansprüche 22 oder 23,
**dadurch gekennzeichnet,**
**dass** im zweiten Betriebsmodus der Auswerteschaltung (16) und/oder der Detektorschaltung (14) nahezu kein Entladestrom (I1, I2) zugeführt wird.

## Claims

1. Transponder circuit with a circuit arrangement (17) with circuit parts arranged in a reception path (24) of a transponder (10), with an input path (30) by way of which a first voltage signal (V2, U2) can be tapped, with a voltage sensor (32 to 34), which is arranged in the input path (30), for measuring the first voltage signal (V2, U2), with at least one output path (31, 37) by way of which a discharge current signal (11, 12) can be tapped, with at least one controllable auxiliary current source (36, 39), which is arranged between the input path (30) and the output path (31, 37), for providing the at least one discharge current signal (I1, I2), the auxiliary current source being so connected at the control side with an output of the voltage sensor (32 to 34) that with increasing voltage of the first voltage signal (V2, U2) the value of the discharge current signal (I1, I2) exponentially increases and a load regulation is thereby produced.

2. Transponder circuit according to claim 1, **characterised in that** the auxiliary current source is constructed as a current sink for providing a discharge current.

3. Transponder circuit according to one of the preceding claims, **characterised in that** the input path (30) is arranged between a first input terminal (18) for coupling in an input potential (V2) and a second terminal (19) with a supply potential (GND) and that the at least one output path (31, 37) is connected with a respective output terminal (21, 22), by way of which the respective discharge current signal (I1, I2) can be tapped, of the circuit arrangement (17).

4. Transponder circuit according to claim 3, **characterised in that** the voltage sensor (32 to 34) comprises at least one first diode (32 to 34) which is connected in flow direction with respect to the first input terminal (18).

5. Transponder circuit according to any one of the preceding claims, **characterised in that** the auxiliary current source (36, 39) comprises at least one current mirror circuit (36, 39) which is arranged at the input side in the input path (30) and is connected at the output side with a respective output terminal (21, 22) of the circuit arrangement (17).

6. Transponder circuit according to claim 5, **characterised in that** at least one second diode (34) of the voltage sensor (32 to 34) is formed by a diode (34) of the current mirror circuit (36, 39) and is connected in series with the other diodes (32, 33) of the voltage sensor (32 to 34).

7. Transponder circuit according to any one of the preceding claims, **characterised in that** at least one of the diodes (32 to 34) of the voltage sensor (32 to 34) and/or at least one of the diodes (34) of the auxiliary current source (36, 39) is constructed as pn-diodes, as MOS diodes or as Schottky diodes.

8. Transponder circuit according to any one of the preceding claims, **characterised in that** the voltage sensor (32 to 34) comprises three diodes (32 to 34) arranged in series connection with respect to one another.

9. Transponder circuit according to any one of the preceding claims, **characterised in that** the transistors (32 to 35, 38) of the voltage sensor (32 to 34) and/or the transistors of the auxiliary current source (34, 35, 38) are constructed as MOSFET transistors, particularly as CMOS transistors.

10. Transponder circuit according to any one of the preceding claims, **characterised in that** the supply potential (GND) is a reference potential, particularly the potential (GND) of the reference earth.

11. Transponder circuit according to any one of the preceding claims, with a detector circuit (10), particularly for the reception path (24) of the transponder (10),
- with an input (11, 12) for reception of a signal (V1) derived from a high-frequency electromagnetic carrier signal (XHF),
- with a circuit part (14) for detection and evaluation of a signal voltage (U1), which comprises a signal capacitor (4), which is downstream of the input (11, 12), at which the signal voltage (U1) dependent on the field strength of the carrier signal (XHF) decays and an evaluating circuit (16), which is downstream of the signal capacitor (4), for evaluation of the signal voltage (U1),
**characterised in that** the circuit arrangement (17) for the load regulation in the case that the signal voltage (U1) exceeds a predetermined threshold (V20) in terms of amount feeds the discharge current signal (I1, I2) from the circuit part (14)/

12. Transponder circuit according to claim 11, **characterised in that** the voltage signal (V2, U2) applied to an input (18, 19) of the circuit arrangement (17) for load regulation is provided as a measure of the predetermined threshold (V20) of the signal voltage (U1).

13. Transponder circuit according to one of claims 11 and 12, **characterised in that** the circuit arrangement (17) for the load regulation is connected at the input side with the input (11, 12) of the detector circuit (10) and that the circuit arrangement (17) for load regulation is connected at the output side with a tap (23) between the signal capacitor (4) and the evaluating circuit (16) and generates the discharge current signal (I1) for discharging the signal capacitor.

14. Transponder circuit according to any one of claims 11 to 13, **characterised in that** the circuit arrangement (17) for the load regulation is connected at the input side with the input (11, 12) of the detector circuit (10) and that the circuit arrangement (17) for load regulation is connected at the output side with the evaluating circuit (16) and generates the discharge current signal (I2) for discharging the evaluating circuit (16).

15. Transponder circuit according to any one of claims 11 to 14, **characterised in that** a first rectifier circuit (3) for rectification of the signal (V1) derived from the carrier signal (XHF) is provided between the input (11, 12) of the detector circuit (10) and the signal capacitor (4).

16. Transponder circuit according to any one of claims 11 to 15, **characterised in that** an RSSI amplifier (15) containing the signal capacitor (4) is provided in the circuit part (14).

17. Transponder circuit according to any one of claims 11 to 16, **characterised in that** a second rectifier circuit (20), particularly a multi-stage rectifier (20), is connected upstream of the circuit arrangement (17) for the load regulation.

18. Transponder circuit according to any one of claims 15 to 17, **characterised in that** the second rectifier circuit (20) has a higher time constant than the first rectifier circuit (15) or comprises the RSSI amplifier (15) having the signal capacitor (4).

19. Transponder, particularly passive and/or semi-passive transponder,
- with an antenna (13), which is arranged between a first and a second input (11, 12) of the transponder, for reception of a high-frequency electromagnetic carrier signal (XHF) for energy supply of the transponder as well for data communication with a transmitting station and
- with a reception path (24) which is connected downstream of the antenna (13) and in which a demodulator circuit for demodulation of a received modulated signal (V1) derived from the carrier signal (XHF) is arranged,
**characterised in that** the demodulator circuit comprises a transponder circuit (10) according to any one of claims 11 to 18.

20. Transponder according to claim 19, **characterised in that** the antenna (13) is constructed as dipole antenna for reception and transmission of high-frequency magnetic carrier signals (XHF).

21. Transponder according to one of claims 19 and 20, **characterised in that** a receiver is provided which is designed for the purpose of receiving a carrier signal (XHF) formed as a high-frequency signal, particularly a high-frequency signal with a frequency in a range of 100 MHz to 4.5 GHz.

22. Method of operating a transponder according to any one of claims 19 to 21,
- with a first operating mode in which the transponder is operated in a near field of a high-frequency electromagnetic carrier signal (XHF) and
- with a second operating mode in which the transponder is operated in a far field of the high-frequency electromagnetic carrier signal (XHF),
**characterised in that** the discharge current (I1, I2) is increased by the circuit part (14) and/or by the evaluating circuit (16) in the first operating mode with increasing signal voltage (U1, U2), particularly with use of a transponder circuit according to any one of claims 1 to 10.

23. Method according to claim 22, **characterised in that** the discharge current (I1, I2) in the first operating mode is exponentially increased with increasing signal voltage (U1, U2).

24. Method according to one of claims 22 and 23, **characterised in that** in the second operating mode almost no discharge current (I1, I2) is supplied to the evaluating circuit (16) and/or the detector circuit (14).

## Revendications

1. Circuit de transpondeur comprenant un bloc de circuits (17) et
. des parties de circuits dans une voie de réception (24) d'un transpondeur (10),
. une voie d'entrée (30) par laquelle on peut prélever un premier signal de tension (V2,U2),
. un capteur de tension (32-34) dans la voie de réception (30) pour mesurer le premier signal de tension (V2,U2),
. au moins une voie de sortie (31,37) par laquelle on peut prélever un signal d'intensité de décharge (I1,I2),
. au moins une source auxiliaire commandable de courant (36,39), disposée entre la voie d'entrée (30) et la voie de sortie (31,37) pour la mise à disposition de l'au moins un signal d'intensité de décharge (I1,I2) qui est reliée par son côté de commande à une sortie d'un capteur de tension (32-34) de façon qu'avec la tension croissante du premier signal de tension (V2,U2), la valeur du signal d'intensité de décharge (11,12) augmente de façon exponentielle et qu'ainsi se produise une régulation de la charge.

2. Circuit de transpondeur selon la revendication 1 **caractérisé en ce que** la source auxiliaire de courant est une source-drain pour la mise à disposition d'un courant de décharge.

3. Circuit de transpondeur selon l'une des revendications précédentes **caractérisé en ce que** la voie d'entrée (30) se trouve entre une connexion d'entrée (18) pour l'application d'une tension d'entrée (V2) et une deuxième connexion (19) portée à une tension d'alimentation (GND) et **en ce qu'**au moins une voie de sortie (31,37) est reliée à chaque fois à une connexion de sortie (21,22) du bloc de circuits (17) par lequel un signal d'intensité de décharge peut être prélevé à chaque fois.

4. Circuit de transpondeur selon la revendication 3 **caractérisé en ce que** le capteur de tension (32-34) comprend au moins une première diode (32-34) qui par rapport à la première connexion d'entrée (18) est montée dans le sens du courant.

5. Circuit de transpondeur selon l'une des revendications précédentes **caractérisé en ce que** la source auxiliaire de courant (36,39), présente au moins un circuit de miroir de courant qui, côté entrée, se trouve dans la voie d'entrée (30) et qui, côté sortie, est relié à chaque connexion de sortie (21,22) du bloc de circuits (17).

6. Circuit de transpondeur selon la revendication 5 **caractérisé en ce qu'**au moins une deuxième diode (34) du capteur de tension (32-34) est une diode (34) du circuit de miroir de courant (36,39) et montée en série dans le circuit avec la diode restante (32,33) du capteur de tension (32-34).

7. Circuit de transpondeur selon l'une des revendications précédentes **caractérisé en ce qu'**au moins une des diodes (32-34) du capteur de tension (32-34) et/ou au moins une des diodes (34) de la source auxiliaire de courant (36,39) sont des diodes pn ou MOS ou des diodes Schottky.

8. Circuit de transpondeur selon l'une des revendications précédentes **caractérisé en ce que** les capteurs de tension (32-34) comportent trois diodes (32-34) montées en série l'une à la suite de l'autre.

9. Circuit de transpondeur selon l'une des revendications précédentes **caractérisé en ce que** les transistors (32-35,38) des capteurs de tension (32-34) et/ou les transistors de la source auxiliaire de courant (34,35,38) sont des transistors MOSFET, en particulier des transistors CMOS.

10. Circuit de transpondeur selon l'une des revendications précédentes **caractérisé en ce** la tension d'alimentation (GND) est une tension de référence en particulier la tension de référence de la masse.

11. Circuit de transpondeur selon l'une des revendications précédentes comprenant un circuit de détection (10) en particulier pour la voie de réception (24) du transpondeur (10) avec :
. une entrée (11,12) pour la réception d'un signal (V1) provenant d'une porteuse électromagnétique haute fréquence (XHF),
une partie de circuit (14) pour la détection et l'exploitation d'une tension de signal (U1) qui comporte un condensateur de signal (4) monté en aval de l'entrée (11,12) par lequel la tension de signal (U1) dépendant de l'intensité du champ de la porteuse (XHF) est appliquée et un circuit d'exploitation (16) monté en aval du condensateur de signal (4) pour l'exploitation de la tension de signal.
**caractérisé en ce que** le bloc de circuits (17) destiné à la régulation de la charge, dans le cas où le signal de tension (U1) dépasse une valeur de seuil (V20) prédéterminée, alimente le signal d'intensité de décharge délivré par la partie de circuit (14)

12. Circuit de transpondeur selon la revendication 11 **caractérisé en ce que** l'on prévoit comme hauteur du seuil prédéterminé (V20) de la tension de signal (U1), le signal de tension (V2,U2) se trouvant à une entrée (18,19) du bloc de circuits (17) pour la régulation de la charge.

13. Circuit de transpondeur selon l'une des revendications 11 à 12 **caractérisé en ce que** le bloc de circuits (17) pour la régulation de la charge côté entrée, est relié à l'entrée (11,12) du circuit de détection (10) et **en ce que** le bloc de circuits (17) pour la régulation de la charge est relié côté sortie à un branchement (23) entre le condensateur de signal (4) et le circuit d'exploitation (16) et qu'il génère un signal d'intensité de décharge (I1) pour décharger le condensateur de signal.

14. Circuit de transpondeur selon l'une des revendications 11 à 13 **caractérisé en ce que** le bloc de circuits (17) pour la régulation de la charge côté entrée est relié à l'entrée (11,12) du circuit de détection (10) et **en ce que** le bloc de circuits (17) pour la régulation de la charge est relié côté sortie, au circuit d'exploitation (16) et génère un signal d'intensité de décharge (I1) pour décharger le circuit d'exploitation (16).

15. Circuit de transpondeur selon l'une des revendications 11 à 14 **caractérisé en ce qu'**entre l'entrée (11,12) du circuit de détection (10) et le condensateur de signal (4), on prévoit un premier circuit redresseur (3) pour redresser le signal (V1) provenant de la porteuse (XHF).

16. Circuit de transpondeur selon l'une des revendications 11 à 15 **caractérisé en ce que**, dans la partie de circuit (14) est prévu un amplificateur RSSI qui contient le condensateur (4) de signal.

17. Circuit de transpondeur selon l'une des revendications 11 à 16 **caractérisé en ce que** le bloc de circuits (17) pour la régulation de la charge présente monté en amont de l'entrée, un deuxième circuit redresseur (20), en particulier un redresseur multi-étages.

18. Circuit de transpondeur selon l'une des revendications 15 à 17 **caractérisé en ce que** le second circuit redresseur (20) présente une constante de temps supérieure au premier circuit redresseur (15) en particulier à l'amplificateur RSSI (15) qui comporte le condensateur de signal (4).

19. Transpondeur, en particulier transpondeur passif ou semi-passif avec :
. une antenne (13) disposée entre une première et une deuxième entrée (11,12) du transpondeur pour la réception d'une porteuse (XHF) électromagnétique et de haute fréquence du signal pour l'alimentation du transpondeur en énergie ainsi que pour la communication de données avec une station d'émission,
. une voie de réception (24) montée en aval de l'antenne (13) dans laquelle est prévu un circuit de démodulation pour la démodulation d'un signal reçu et modulé (V1) provenant de la porteuse (XHF).
**caractérisé en ce que** le circuit de démodulation comporte un circuit de transpondeur selon l'une des revendications 11 à 18.

20. Transpondeur selon la revendication 19 **caractérisé en ce que** l'antenne (13) est une antenne dipolaire pour la réception et l'émission d'une porteuse électromagnétique de haute fréquence.

21. Transpondeur selon les revendications 19 ou 20 **caractérisé par** un récepteur prévu pour recevoir un signal haute fréquence de porteuse (XHF), en particulier de haute fréquence, de fréquence comprise dans la gamme s'étendant de 100 MHz à 4,5 GHz.

22. Procédé pour faire fonctionner un transpondeur selon l'une des revendications 19 à 21
. dans un premier mode de fonctionnement, selon lequel on fait fonctionner le transpondeur dans un champ proche d'une porteuse de signal (XHF) de haute fréquence électromagnétique,
. dans un deuxième mode de fonctionnement selon lequel on fait fonctionner le transpondeur dans un champ éloigné d'une porteuse de signal (XHF) de haute fréquence électromagnétique,
**caractérisé en ce que** l'on augmente le courant de décharge (I1,I2) par la partie de circuit (14) et/ou par le circuit d'exploitation en premier mode de fonctionnement, avec une tension croissante de signal (U1,U2), en particulier en utilisant un circuit de transpondeur selon les revendications 1 à 10.

23. Procédé selon la revendication 22 **caractérisé en ce que** l'on augmente de façon exponentielle le courant de décharge (I1,I2) dans le premier mode de fonctionnement avec une tension de signal (U1,U2) croissante.

24. Procédé selon l'une des revendications 22 ou 23 **caractérisé en ce que**, dans le deuxième mode de fonctionnement, on n'alimente presque pas le circuit d'exploitation (16) et/ou le circuit de détection en courant de décharge.
